# EUROPEAN PATENT APPLICATION

(11) **EP 2 787 147 A1**
(43) Date of publication of application: **08.10.2014**
(21) Application number: 12852501.1
(22) Date of filing: 09.10.2012
(51) Int. Cl.: E04G 21/04, F16H 21/00, F16H 21/10

(54) **CONCRETE PUMPING DEVICE, BENDING CONNECTING ROD MECHANISM THEREOF AND MANUFACTURING METHOD FOR BENDING CONNECTING ROD MECHANISM**

(30) Priority: 30.11.2011 CN 201110386960
(71) Applicant: Zoomlion Heavy Industry Science and Technology Co., Ltd., Changsha, Hunan 410013 (CN); Hunan Zoomlion Special Vehicle Co. Ltd., Changde, Hunan 415106 (CN)
(72) Inventor: LI, Xiaochao Zoomlion Heavy Ind. Science a. Technology Co., Ltd, Hunan 410013 (CN); WANG, Jiaqian Zoomlion Heavy Ind. Science a. Technology Co., Ltd, Hunan 410013 (CN); SU, Canjun Zoomlion Heavy Ind. Science a. Technology Co., Ltd, Hunan 410013 (CN)
(74) Representative: Durán-Corretjer, S.L.P.
(86) International application number: PCT/CN2012/082651
(87) International publication number: WO 2013/078920

(57) **Abstract**

The disclosure provides a concrete pumping equipment and a bending connecting rod device thereof, and a manufacturing method for the device. The bending connecting rod device comprises a shaft sleeve, at least two composite support plates and cover plates, wherein the at least two composite support plates are provided with holes, the shaft sleeve is embedded in the holes, and the at least two composite support plates are arranged on the shaft sleeve at intervals; and the cover plates are fixedly arranged at the ends of the shaft sleeve. Through the disclosure, the bending connecting rod is formed by thermally pressing and solidifying the composite support plates and the shaft sleeve embedded in the composite support plates, so as to have the characteristics of light weight, and high strength, corrosion resistance and designability.

## Description

### Field of the invention

The disclosure relates to the field of concrete equipment, in particular to a concrete pumping equipment and a bending connecting rod device thereof, and a manufacturing method for the device.

### Background of the invention

In the operation process of concrete, more and more concrete are conveyed by a truck-mounted concrete pump. With the rapid development of concrete machinery, concrete is required to be conveyed to a higher and longer distance, and accordingly, the materials of the boom, connecting rod and hydraulic cylinder for the concrete machinery are required to be developed towards light weight and high strength.

The bending connecting rod of the concrete equipment (such as the truck-mounted concrete pump) in the prior art is welded by steel plates and may have a relatively large weight due to the relatively high density of the steel plates, therefore, the boom length of the concrete pumping equipment (in particular the truck-mounted concrete pump) is limited seriously and the development of the concrete pumping equipment is restricted. In addition, welded by the steel plates, the bending connecting rod is not very stable in size, therefore, it is necessary to weld a reinforcement plate at the joint between the bending connecting rod and a shaft sleeve, and welding and re-welding are required for many times, which may cause the defects of complex procedure and poor strength. In addition, the steel bending connecting rod is relatively poor in fatigue resistance and corrosion resistance.

### Summary of the invention

The disclosure aims to provide a concrete pumping equipment and a bending connecting rod device thereof, and a manufacturing method for the device, in order to solve the problems of large weight, complex manufacturing process and low strength of the bending connecting rod device in the prior art.

To solve the technical problems, in the first aspect, the disclosure provides a bending connecting rod device of the concrete pumping equipment. The bending connecting rod device comprises a shaft sleeve, at least two composite support plates and cover plates, wherein the at least two composite support plates are provided with holes, the shaft sleeve is embedded in holes, and the at least two composite support plates are arranged on the shaft sleeve at intervals; and the cover plates are fixedly arranged at the ends of the shaft sleeve.

Furthermore, the bending connecting rod device further comprises cushions, each of which is arranged between one cover plate and the composite support plate closest to the cover plate.

Furthermore, the cushions are rubber cushions.

Furthermore, each composite support plate is formed by laminating and laying and thermally pressing and solidifying prepregs containing resin and fiber.

Furthermore, the fiber comprises one or more of carbon fiber, glass fiber, aramid fiber and ultra-high molecular weight polyethylene fiber.

Furthermore, the resin is epoxy resin, unsaturated polyester, vinyl resin or phenol-formaldehyde resin.

Furthermore, the fiber is flat knitted fabric, unidirectional fabric or weftless fabric.

In the second aspect, the disclosure provides a manufacturing method for the bending connecting rod device of the concrete pumping equipment, comprising the following steps : Step S1: a shaft sleeve is embedded in the holes of at least two composite support plates and the at least two composite support plates are arranged on the shaft sleeve at intervals to form a first product; Step S2: the first product is placed in a thermal-pressing and solidifying device to be thermally pressed and solidified; and Step S3: cover plates are fixed at the ends of the shaft sleeve.

Furthermore, the method further comprises Step S21 between Step S2 and Step S3; and Step S21 comprises: cushions are sleeved at the ends of the shaft sleeve.

In the third aspect, the disclosure provides a concrete pumping equipment, comprising a bending connecting rod device, which is the bending connecting rod device mentioned above.

Through the disclosure, the bending connecting rod is formed by thermally pressing and solidifying the composite support plates and the shaft sleeve embedded in the composite support plates, so as to have the characteristics of light weight, and high strength, corrosion resistance and designability.

### Brief description of the drawings

The drawings constituting one part of the application are to provide further understanding of the disclosure, and the exemplary embodiments of the disclosure and the explanations thereof are intended to explain the disclosure, instead of improperly limiting the disclosure. In the drawings:
Fig. 1 schematically shows a main view of the disclosure; and
Fig. 2 schematically shows an A-A part sectioned view of Fig. 1.

### Detailed description of the embodiments

The embodiments of the disclosure will be described below with reference to the drawings in detail, but the disclosure can be implemented by various ways limited and covered by the claims.

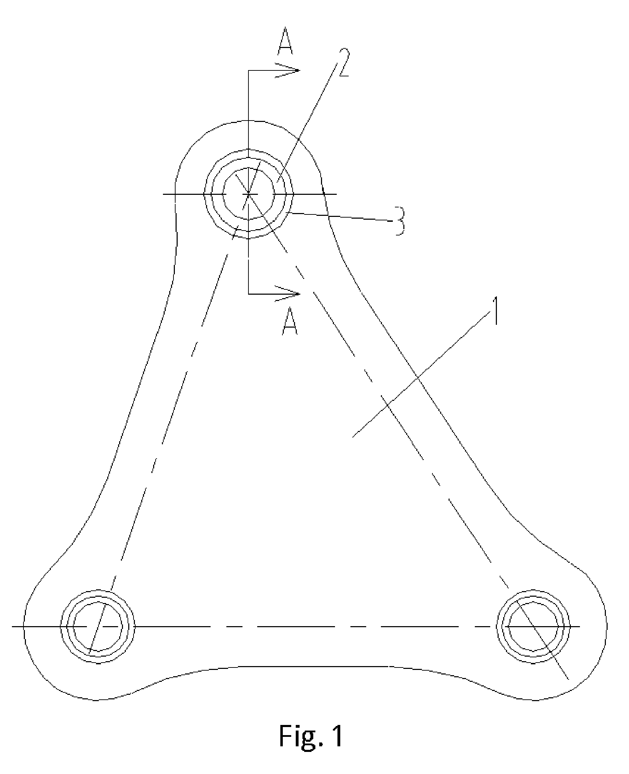

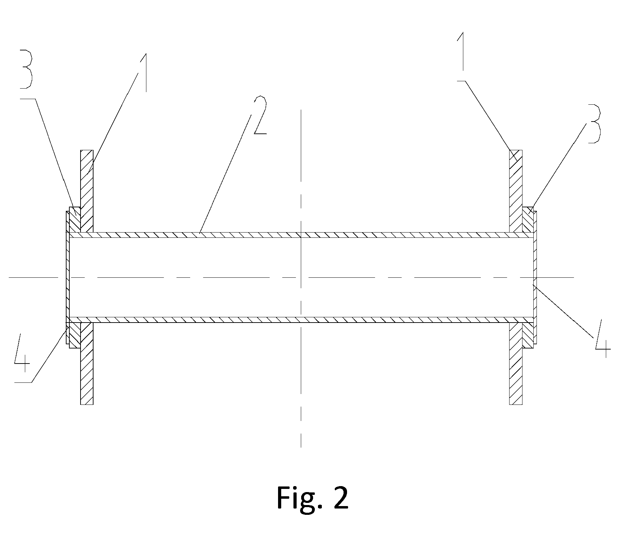

In the first aspect, the disclosure provides a bending connecting rod device of concrete pumping equipment. As shown in Figs. 1 and 2, the bending connecting rod device comprises a shaft sleeve 2, at least two composite support plates 1 and cover plates 4, wherein the composite support plates 1 are provided with holes, in which the shaft sleeve 2 is embedded, and are arranged on the shaft sleeve 2 at intervals. The cover plates 4 are fixedly arranged at the ends of the shaft sleeve 2. Preferably, thickened parts are arranged at the joints between the composite support plates 1 and the shaft sleeve 2. Preferably, there are two composite support plates 1, which are arranged adjacent to the two ends of the shaft sleeve 2 respectively so as to be limited.

The support plates, made of composite materials, are approximate to steel in strength but only 1/4 as dense as the steel, so that the bending connecting rod has a relatively small weight while ensuring its strength, which is favorable for the manufacturing of a longer boom. In addition, the support plates made of the composite materials have a high designability, so that the structure and thickness at different part of the bending connecting rod can be designed according to its stress condition; and the mechanical property of the support plates is improved by layering fibers in different directions. In addition, with high fatigue resistance, the support plates made of the composite materials can provide the bending connecting rod with high fatigue resistance, corrosion resistance and impact resistance and enable the bending connecting rod to have high corrosion resistance and vibration reducing performance, therefore, the service life of the bending connecting rod is prolonged. The damage to the bending connecting rod comprises matrix damage, cracking, interface debonding, fiber breakage and the like, namely, the damage process of the composite materials has slow variability, so that the problems can be found timely in the using process and the safety of the bending connecting rod is improved. Finally, the bending connecting rod device provided by the disclosure further has the characteristics of simple manufacturing and good processing property.

Preferably, the bending connecting rod device further comprises cushions 3, each of which is arranged between one cover plate and the composite support plate 1 closest to the cover plate. Furthermore, the cushions 3 are rubber cushions. Preferably, the cushions 3 are bonded with the shaft sleeve and the cover plates by high-strength adhesives, so as to separate the composite support plates 1 from the cover plates 4 and provide certain buffering protection for the deformation of the composite support plates 1, therefore, the composite support plates 1 cannot be damaged even undergoing certain deformation.

Preferably, each composite support plate 1 is formed by laminating and laying and thermally pressing and solidifying prepregs containing resin and fiber. Preferably, an autoclave is adopted for thermal pressing and solidification. Furthermore, the forming way for the thermal pressing and solidification is not limited to the preferred formation solution of the autoclave, and can further be hand lay-up, die pressing, resin transfer molding or winding and the like.

Preferably, the fiber comprises one or more of carbon fiber, glass fiber, aramid fiber and ultra-high molecular weight polyethylene fiber (with a molecular weight of more than one hundred thousand), wherein optimally, the fiber is the carbon fiber; in addition, the advantages of various fibers can be fully utilized and the cost can be reduced due to the adoption of various fibers. Preferably, the fiber is flat knitted fabric, unidirectional fabric or weftless fabric. Particularly, the composite materials of the composite support plates 1 are layered in different directions to improve the strength and mechanical property of the composite support plates 1.

Preferably, the resin is epoxy resin, unsaturated polyester, vinyl resin or phenol-formaldehyde resin, wherein the epoxy resin can achieve the best combination property, the unsaturated polyesterand the phenol-formaldehyde resin can reduce the cost and are rich in sources; and the vinyl resin can achieve a relatively high cost performance.

In the second aspect, the disclosure provides a method for manufacturing the bending connecting rod device of the concrete pumping equipment. With reference to the bending connecting rod device in Figs. 1 and 2, the method comprises the following steps:
Step S1: The shaft sleeve 2 is embedded in the holes of the at least two composite support plates 1 and the at least two composite support plates 1 are arranged on the shaft sleeve 2 at intervals to form a first product. Specifically, prepregs can be cut into the shape of the composite support plates 1 and then are layered in different directions in a die; and the shaft sleeve 2 is embedded in the holes of the composite support plates 1.
Step S2: The first product is placed in a thermal-pressing and solidifying device to be thermally pressed and solidified. Preferably, the thermal-pressing and solidifying device is an autoclave.
Step S3: The cover plates 4 are fixed at the ends of the shaft sleeve 2.

Made of the composite materials, the bending connecting rod manufactured by the method is approximate to steel in strength but only 1/4 as dense as the steel, therefore, the bending connecting rod has a relatively small weight while ensuring its strength, which is favorable for the manufacturing of a longer boom. In addition, the support plates manufactured by the method have a high designability, so that the structure and thickness at different part of the bending connecting rod can be designed according to its stress condition; and the mechanical property of the support plates is improved by layering fibers in different directions. In addition, with high fatigue resistance, the support plates made of the composite materials can provide the bending connecting rod with high fatigue resistance, corrosion resistance and impact resistance and enable the bending connecting rod to have high corrosion resistance and vibration reducing performance, therefore, the service life of the bending connecting rod is prolonged. The damage to the bending connecting rod comprises matrix damage, cracking, interface debonding, fiber breakage and the like, namely, the damage process of the composite materials has slow variability, therefore, the problems of the bending connecting rod manufactured by the method can be found timely in the using process and the safety of the bending connecting rod is improved. Finally, the method further has the characteristics of simple manufacturing and good processing property.

Preferably, the method further comprises Step S21 between Step S2 and Step S3; and Step S21 comprises: the cushions 3 are sleeved at the ends of the shaft sleeve 2.

In the third aspect, the disclosure provides concrete pumping equipment, comprising a bending connecting rod device, which is the bending connecting rod device mentioned in each embodiment above.

The above are only preferred embodiments of the disclosure and not intended to limit the disclosure. For those skilled in the art, various modifications and changes can be made in the disclosure. Any modifications, equivalent replacements, improvements and the like within the spirit and principle of the disclosure shall fall within the scope of protection of the disclosure.

## Claims

1. A bending connecting rod device of concrete pumping equipment, **characterized by** that comprising:
a shaft sleeve (2);
at least two composite support plates (1), which are provided with holes, and the shaft sleeve (2) is embedded in the holes, and the at least two composite support plates (1) are arranged on the shaft sleeve (2) at intervals; and
cover plates (4), which are fixedly arranged at the ends of the shaft sleeve (2).

2. The bending connecting rod device according to claim 1, **characterized by** that further comprising cushions (3), each of which is arranged between one cover plate (4) and the composite support plate (1) closest to the cover plate (4).

3. The bending connecting rod device according to claim 2, **characterized in that**, the cushions (3) are rubber cushions.

4. The bending connecting rod device according to any one of claims 1 to 3, **characterized in that**, each composite support plate (1) is formed by laminating and laying and thermally pressing and solidifying prepregs containing resin and fiber.

5. The bending connecting rod device according to claim 4, **characterized in that**, the fiber comprises one or more of carbon fiber, glass fiber, aramid fiber and ultra-high molecular weight polyethylene fiber.

6. The bending connecting rod device according to claim 4, **characterized in that**, the resin is epoxy resin, unsaturated polyester, vinyl resin or phenol-formaldehyde resin.

7. The bending connecting rod device according to claim 4, **characterized in that**, the fiber is flat knitted fabric, unidirectional fabric or weftless fabric.

8. A manufacturing method for the bending connecting rod device of the concrete pumping equipment, **characterized by** that comprising:
Step S1: embedding a shaft sleeve (2) in the holes of at least two composite support plates (1) and arranging the at least two composite support plates (1) on the shaft sleeve (2) at intervals to form a first product;
Step S2: placing the first product in a thermal-pressing and solidifying device for thermal pressing and solidification; and
Step S3: fixing cover plates (4) at the ends of the shaft sleeve (2).

9. The manufacturing method according to claim 8, **characterized by** that further comprising Step S21 between Step S2 and Step S3, wherein
Step S21 comprises: sleeving cushions (3) at the ends of the shaft sleeve (2).

10. A concrete pumping equipment, **characterized by** that comprising a bending connecting rod device, wherein the bending connecting rod device is the bending connecting rod device according to any one of claims 1 to 7.
